(19) Europäisches Patentamt / European Patent Office / Office européen des brevets

(11) **EP 4 389 259 A1**

(12) **EUROPEAN PATENT APPLICATION**
published in accordance with Art. 153(4) EPC

(43) Date of publication:
**26.06.2024  Bulletin 2024/26**

(21) Application number: **22858130.2**

(22) Date of filing: **27.05.2022**

(51) International Patent Classification (IPC):
**B01D 53/86** [(2006.01)]     **B01J 23/46** [(2006.01)]

(52) Cooperative Patent Classification (CPC):
**B01D 53/86; B01J 23/46;** Y02C 20/10

(86) International application number:
**PCT/JP2022/021707**

(87) International publication number:
**WO 2023/021806 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.08.2021   JP 2021133128**

(71) Applicant: **Sumitomo Chemical Company Limited
Tokyo 103-6020 (JP)**

(72) Inventors:
• **ABEKAWA, Hiroaki
  Ichihara-shi, Chiba 299-0195 (JP)**
• **SUZUKI, Hitomi
  Tokyo 103-6020 (JP)**

(74) Representative: **Global IP Europe
Patentanwaltskanzlei
Pfarrstraße 14
80538 München (DE)**

(54) **NITROUS OXIDE DECOMPOSITION METHOD AND NITROUS OXIDE DECOMPOSITION DEVICE**

(57)     Provided are a nitrous oxide decomposition method and a decomposition apparatus capable of efficiently decomposing nitrous oxide in a nitrous oxide-containing gas.

Disclosed are:
a method of decomposing nitrous oxide, which includes the step of bringing a catalyst including a titanium oxide-containing carrier carrying a component containing at least one kind selected from the group consisting of ruthenium and ruthenium compounds into contact with a nitrous oxide-containing gas containing nitrous oxide, water vapor and ammonia; and
a nitrous oxide decomposition apparatus including a reactor filled with the above catalyst and a line that is connected to the reactor and supplies the nitrous oxide-containing gas to the reactor.

EP 4 389 259 A1

## EP 4 389 259 A1

**Description**

FIELD OF THE INVENTION

The present invention relates to a method of decomposing nitrous oxide and an apparatus for decomposing nitrous oxide.

BACKGROUND OF THE INVENTION

From the viewpoints of global environment protection and air pollution prevention, nitrogen oxides (NOx) in exhaust gas are regarded as a problem, and the emission thereof is strictly regulated. In particular, among nitrogen oxides is a nitrogen dioxide ($NO_2$), which is harmful to the human body and causes photochemical smog and acid rain and is thus a target of emission control. Here, various denitration techniques have been studied and put into practice in order to reduce the emission amount. However, nitrous oxide ($N_2O$), which is a kind of nitrogen oxide, is not currently subject to emission control, and is usually released into the atmosphere as it is. Actually, in the gas discharged from a chemical production plant, such as a nitric acid production plant, an $\varepsilon$-caprolactam production plant, an adipic acid production plant, nitrogen monoxide and nitrogen dioxide are decomposed and removed by denitration treatment, but nitrous oxide as a by-product is often discharged (released) into the atmosphere without being decomposed and removed.

However, once a greenhouse gas such as nitrous oxide is released into the atmosphere, an increase in the level of greenhouse gas makes stronger the greenhouse effect on the atmosphere. This is considered to cause global warming. Nitrous oxide is then considered to elicit a warming effect about 300 times that of carbon dioxide. Thus, in recent years, there is an increasing interest in reducing emission of nitrous oxide into the atmosphere together with, for instance, carbon dioxide and methane. With the increase in sustainable environmental awareness, it is expected that nitrous oxide will be a target of emission gas control in the near future. Therefore, there is a need for a technology for decomposing and removing nitrous oxide from exhaust gas to suppress the amount of emission into the atmosphere. As a technology for decomposing and removing nitrous oxide from exhaust gas, for example, Patent Literature 1 describes a nitrous oxide decomposition method in which a gas containing nitrous oxide is catalytically decomposed in the co-presence of a reducing gas by using a catalyst characterized by carrying at least one or more noble metals selected from ruthenium (Ru), rhodium (Rh), palladium (Pd), rhenium (Re), osmium (Os), iridium (Ir), or platinum (Pt).

CITATION LIST

PATENT LITERATURE

Patent Literature 1: JP-A-H06-218232 ("JP-A" means unexamined published Japanese patent application)

SUMMARY OF THE INVENTION

TECHNICAL PROBLEM

The nitrous oxide decomposition method described in Patent Literature 1 is considered to be able to decompose nitrous oxide in a nitrous oxide-containing gas by catalytically decomposing the nitrous oxide-containing gas in the co-presence of a reducing gas such as carbon monoxide, a hydrocarbon gas, a mineral oil-based hydrocarbon gas, and/or alcohols. However, the efficiency of decomposing nitrous oxide is insufficient, and further improvement of the nitrous oxide decomposition efficiency is desired.

The present invention provides a method of decomposing nitrous oxide and an apparatus for decomposing nitrous oxide such that nitrous oxide in a gas containing nitrous oxide, water vapor and ammonia can be efficiently decomposed.

SOLUTION TO PROBLEM

Specifically, the above problems of the present invention are solved by the following means.

<1> A method of decomposing nitrous oxide, which includes the step of bringing a catalyst including a titanium oxide-containing carrier carrying a component containing at least one kind selected from the group consisting of ruthenium and ruthenium compounds into contact with a nitrous oxide-containing gas containing nitrous oxide, water vapor and ammonia.

<2> The method of decomposing nitrous oxide described in <1 >, wherein a molar ratio of the ammonia to the water vapor contained in the nitrous oxide-containing gas is from 0.001 to 0.050.

<3> The method of decomposing nitrous oxide described in <1> or <2>, wherein a mole concentration of the nitrous oxide contained in the nitrous oxide-containing gas is from 0.002 to 10%.

<4> The method of decomposing nitrous oxide described in any one of <1> to <3>, wherein a mole concentration of the water vapor contained in the nitrous oxide-containing gas is from 0.1 to 10%.

<5> The method of decomposing nitrous oxide described in any one of <1> to <4>, wherein the nitrous oxide-containing gas further includes a saturated hydrocarbon gas.

<6> The method of decomposing nitrous oxide described in any one of <1> to <5>, wherein the nitrous oxide-containing gas further includes a reducing gas.

<7> The method of decomposing nitrous oxide described in <6>, wherein the reducing gas is a carbon monoxide gas, an unsaturated hydrocarbon gas, or a hydrogen gas.

<8> The method of decomposing nitrous oxide described in any one of <1> to <7>, wherein the nitrous oxide-containing gas is a gas discharged from a chemical production plant.

<9> An apparatus for decomposing nitrous oxide, including:

> a reactor filled with a catalyst including a titanium oxide-containing carrier carrying a component containing at least one kind selected from the group consisting of ruthenium and ruthenium compounds; and
> a line that is connected to the reactor and supplies, to the reactor, a nitrous oxide-containing gas containing nitrous oxide, water vapor and ammonia.

ADVANTAGEOUS EFFECTS OF INVENTION

The method of decomposing nitrous oxide and the apparatus for decomposing nitrous oxide according to the present invention make it possible to efficiently decompose nitrous oxide in a gas containing nitrous oxide, water vapor and ammonia.

DESCRIPTION OF EMBODIMENTS

A numerical value range indicated by using the term "to" in the present invention herein means a range including the numerical values described before and after the term "to" as the lower limit value and the upper limit value, respectively.

[Method of decomposing nitrous oxide]

A method of decomposing nitrous oxide according to the present invention (hereinafter, sometimes simply referred to as a decomposition method of the present invention) includes the step of bringing a catalyst including a titanium oxide-containing carrier carrying a component containing at least one kind selected from the group consisting of ruthenium and ruthenium compounds into contact with a nitrous oxide-containing gas containing nitrous oxide, water vapor and ammonia (hereinafter, sometimes referred to as a contact step). This contact step, as described later, makes it possible to efficiently decompose nitrous oxide in the nitrous oxide-containing gas into nitrogen molecules (usually nitrogen gas) and oxygen molecules (usually oxygen gas).

<Catalyst>

The decomposition method of the present invention uses a catalyst including a titanium oxide-containing carrier carrying a component containing at least one kind selected from the group consisting of ruthenium and ruthenium compounds.

As used herein, the "catalyst including a titanium oxide-containing carrier carrying a component containing at least one kind selected from the group consisting of ruthenium and ruthenium compounds" means a catalyst in which a component containing at least one kind selected from the group consisting of ruthenium and ruthenium compounds is attached to the surface and/or pores of a titanium oxide-containing carrier.

In the decomposition method of the present invention, at least one kind selected from the group consisting of ruthenium and ruthenium compounds is selected as the component supported on the carrier from the viewpoint of balance between catalytic activity and cost.

(Ruthenium compound)

Examples of the ruthenium compound include, but are not particularly limited to, ruthenium oxide, ruthenium hydroxide, ruthenium nitrate, ruthenium chloride, chlororuthenate, chlororuthenate hydrate, a salt of ruthenic acid, ruthenium oxychloride, a salt of ruthenium oxychloride, a ruthenium ammine complex, a ruthenium ammine complex chloride, ruthenium bromide, a ruthenium carbonyl complex, a ruthenium organic acid salt, or a ruthenium nitrosyl complex.

Examples of the ruthenium oxide include $RuO_2$.

Examples of the ruthenium hydroxide include $Ru(OH)_3$.

Examples of the ruthenium nitrate include $Ru(NO_3)_3$.

Examples of the ruthenium chloride include $RuCl_3$ and $RuCl_3$ hydrate.

Examples of the chlororuthenate include a salt having $[RuCl_6]^{3-}$ as an anion, such as $K_3RuCl_6$, and a salt having $[RuCl_6]^{2-}$ as an anion, such as $K_2RuCl_6$, $(NH_4)_2RuCl_6$.

Examples of the chlororuthenate hydrate include a salt hydrate having $[RuCl_5(H_2O)_4]^{2-}$ as an anion and a salt hydrate having $[RuCl_2(H_2O)_4]^{+}$ as a cation.

Examples of the salt of ruthenic acid include $Na_2RuO_4$ and $K_2RuO_4$.

Examples of the ruthenium oxychloride include $Ru_2OCl_4$, $Ru_2OCl_5$, and $Ru_2OCl_6$.

Examples of the salt of ruthenium oxychloride include $K_2Ru_2OCl_{10}$ and $Cs_2Ru_2OCl_4$.

Examples of the ruthenium ammine complex include a complex having $[Ru(NH_3)_6]^{2+}$, $[Ru(NH_3)_6]^{3+}$, or $[Ru(NH_3)_5H_2O]^{2+}$ as a complex ion.

Examples of the chloride of ruthenium ammine complex include a complex having $[Ru(NH_3)_5Cl]^{2+}$ as a complex ion, and $[Ru(NH_3)_6]Cl_2$, $[Ru(NH_3)_6]Cl_3$, and $[Ru(NH_3)_6]Br_3$.

Examples of the ruthenium bromide include $RuBr_3$ and $RuBr_3$ hydrate.

Examples of the ruthenium carbonyl complex include $Ru(CO)s$ and $Ru_3(CO)_{12}$.

Examples of the ruthenium organic acid salt include $[Ru_3O(OCOCH_3)_6(H_2O)_3]OCOCH_3$ hydrate and $Ru_2(RCOO)_4Cl$ (R = an alkyl group having 1 to 3 carbon atoms).

Examples of the ruthenium nitrosyl complex include $K_2[RuCl_5NO]$, $[Ru(NH_3)_5(NO)]Cl_3$, $[Ru(OH)(NH_3)_4(NO)](NO_3)_2$, and $Ru(NO)(NO_3)_3$.

The ruthenium compound is preferably ruthenium oxide, ruthenium nitrate, ruthenium chloride, ruthenium bromide, a salt of ruthenium acid, or a ruthenium nitrosyl complex, and more preferably ruthenium oxide.

The component supported on the titanium oxide-containing carrier may contain at least one kind selected from the group consisting of ruthenium and ruthenium compounds, and may further contain, for example, a metal other than ruthenium and/or a metal compound other than the ruthenium compounds.

In the present invention, a substance that causes catalyst poisoning should be prevented from being adsorbed on the surface of the catalyst, the performance of the catalyst should be prevented from being deteriorated, or sintering of a catalyst active point should be prevented. For such purposes, the catalyst is preferably a catalyst including the titanium oxide-containing carrier further carrying at least one kind selected from the group consisting of metals other than ruthenium and metal compounds other than ruthenium compounds.

Examples of the metal other than ruthenium include, but are not particularly limited to, silicon, zirconium, aluminum, niobium, tin, copper, iron, cobalt, nickel, vanadium, chromium, molybdenum, tungsten, manganese, antimony, and tellurium. Examples of the metal compound other than ruthenium compounds include, but are not particularly limited to, a compound having a metal other than ruthenium. Preferred is an oxide of the metal other than ruthenium. The metal oxide may be a composite oxide containing a plurality of metal species. In addition, the catalyst may be a catalyst including the carrier further carrying an alloy of ruthenium and a metal other than ruthenium and/or a composite oxide containing ruthenium and a metal other than ruthenium.

The catalyst is more preferably a catalyst including the carrier that contains titanium oxide in rutile crystal form and further carries at least one oxide selected from the group consisting of silicon oxide, zirconium oxide, aluminum oxide, niobium oxide, manganese oxide, antimony oxide, tellurium oxide, and tin oxide.

The metal salt used for obtaining the metal oxide is not particularly limited.

The content of at least one kind selected from the group consisting of ruthenium and ruthenium compounds in the catalyst is not particularly limited and is set, if appropriate. For example, the content is preferably from 0.1 to 20 mass%, more preferably from 0.5 to 10 mass%, and still more preferably from 1 to 5 mass% in terms of metal ruthenium.

The content of at least one kind selected from the group consisting of ruthenium and ruthenium compounds in terms of metal ruthenium is preferably from 0.1 to 20 mass%, more preferably from 0.5 to 10 mass%, and still more preferably from 1 to 5 mass% based on the total 100 mass% of the carrier and the component containing at least one kind selected from the group consisting of ruthenium and ruthenium compounds.

The contents of the metal other than ruthenium, the metal compound other than ruthenium compounds, and others in the catalyst are not particularly limited, and can be set, if appropriate, depending on the above purpose.

(Carrier)

The carrier may be any carrier as long as it contains titanium oxide, and may contain, for instance, another compound(s) described later. The crystal form of titanium oxide constituting the carrier is not particularly limited, and may be any of a rutile crystal form, an anatase crystal form, or a brookite crystal form. In the present invention, the carrier is preferably composed of titanium oxide and contains titanium oxide in a rutile crystal form. From the viewpoint of catalytic activity, the content of titanium oxide in a rutile crystal form in the titanium oxide contained in the carrier is preferably 20 mass% or larger, more preferably 30 mass% or larger, still more preferably 80 mass% or larger, and still more preferably 90 mass% or larger based on total 100 mass% of the titanium oxide contained in the carrier.

In the present invention, the titanium oxide containing titanium oxide in a rutile crystal form refers to titanium oxide containing a rutile crystal among rutile crystals and anatase crystals, the ratio of which is measured by X-ray diffraction analysis. Various radiation sources are used as the X-ray source. Examples thereof include copper Kα radiation. In the case of using copper Kα radiation, the ratio of rutile crystals and the ratio of anatase crystals are determined using the intensity of a diffraction peak at 2θ = 27.5 degrees in the (110) plane and the intensity of a diffraction peak at 2θ = 25.3 degrees in the (101) plane, respectively. The carrier used in the present invention is a carrier having a peak intensity of rutile crystal and a peak intensity of anatase crystal, or a carrier having a peak intensity of rutile crystal. That is, the carrier may have both the diffraction peak of rutile crystal and the diffraction peak of anatase crystal, or may have only the diffraction peak of rutile crystal.

Examples of other compounds that may be contained in the carrier include metal oxides other than titanium oxide, composite oxides of titanium oxide and other metal oxides, or mixtures of titanium oxide and other metal oxides. Examples of the metal oxide other than titanium oxide include aluminum oxide, silicon oxide and zirconium oxide.

Titanium oxide prepared by a known method may be used, and commercially available products may also be used.

Examples of the method for preparing titanium oxide in a rutile crystal form include the following methods:

a method in which titanium tetrachloride is added dropwise to ice-cooled water and dissolved, and neutralized with an aqueous ammonia solution at a temperature of 20°C or higher to produce titanium hydroxide (orthotitanic acid), and, the generated precipitate was washed with water to remove chlorine ions, and is calcinated at a temperature of 600°C or higher (Catalyst Preparation Chemistry, 1989, p. 211, Kodansha Ltd.);
a method in which an oxygen-nitrogen mixed gas is made to pass through a titanium tetrachloride evaporator to prepare a reaction gas, and the resulting gas is introduced into a reactor and reacted at 900°C or higher (Catalyst Preparation Chemistry, 1989, p. 89, Kodansha Ltd.);
a method in which titanium tetrachloride is hydrolyzed in the presence of ammonium sulfate and then calcinated (e.g., Catalyst Engineering Course, Handbook of Catalysts Using Any of 10 Elements, 1978, p. 254, Chijinshokan, Co. Ltd.);
a method for calcinating titanium oxide in an anatase crystal form (e.g., Metal Oxides and Composite Oxides, 1980, p. 107, Kodansha Ltd.);
a method for thermally hydrolyzing a titanium chloride aqueous solution; and
a method in which a titanium compound (e.g., titanium sulfate, titanium chloride)-containing aqueous solution is mixed with rutile crystalline titanium oxide powder, the mixture is subsequently subjected to thermal hydrolysis or alkali hydrolysis, and then calcinated at a temperature around 500°C.

The carrier can be obtained by molding, for instance, titanium oxide into a desired shape. When the carrier contains, for instance, a compound other than titanium oxide, the carrier can be obtained by molding a mixture of titanium oxide and another compound(s) into a desired shape.

The shape of the catalyst (carrier) is not particularly limited, and examples thereof include spherical particles, cylindrical pellets, a ring shape, a honeycomb shape, a monolith shape, a corrugated shape, or microparticles or granules with a suitable size as pulverized and classified after molding. In the case of spherical particles, cylindrical pellets, or rings, the catalyst diameter is preferably 10 mm or less from the viewpoint of catalytic activity. Note that the catalyst diameter herein means the diameter of a sphere in the case of spherical particles, the diameter of a cross section in the case of cylindrical pellets, or the maximum diameter of a cross section in the case of other shapes.

The catalyst used in the decomposition method of the present invention may be prepared by a method including: impregnating a titanium oxide-containing carrier with a solution containing at least one kind selected from the group consisting of ruthenium and ruthenium compounds; attaching, to the carrier, a component containing at least one kind selected from the group consisting of ruthenium and ruthenium compounds; and drying the carrier. The solvent in the solution containing the component containing at least one kind selected from the group consisting of ruthenium and ruthenium compounds is not particularly limited. The solvent used may be, for instance, water and/or ethanol. After drying, the resulting carrier may be calcinated.

When the catalyst contains ruthenium oxide, for example, the catalyst can be obtained by a method including the steps of: impregnating a titanium oxide-containing carrier with a solution containing ruthenium halide to support the ruthenium halide on the carrier; drying the carrier material supported on the ruthenium halide-carrying carrier; and calcinating the dried product.

The catalyst may be diluted with an inert substance and then used.

<Nitrous oxide-containing gas>

The decomposition method of the present invention uses a nitrous oxide-containing gas containing nitrous oxide, water vapor and ammonia.

The nitrous oxide-containing gas may contain one kind or two or more kinds of gases other than nitrous oxide, water vapor and ammonia as long as the gases contain these gases. Examples of such a gas include each gas, such as oxygen, helium, argon, nitrogen and carbon dioxide, and a reducing gas. The nitrous oxide-containing gas may contain a liquid. In the decomposition method of the present invention, the nitrous oxide-containing gas only needs to be a gas at least while being in contact with the above catalyst (under reaction conditions), and may be a liquid or a mixture of a gas and a liquid before contact.

The content (concentration) of each component in the nitrous oxide-containing gas is not particularly limited and can be set, if appropriate. However, it is usually efficient to use the nitrous oxide-containing gas almost as it is with respect to a value specific to a factory from which the nitrous oxide-containing gas is discharged, except for a component having a special effect. Thus, for example, the mole concentration of nitrous oxide in the nitrous oxide-containing gas is generally and preferably from 0.002 to 10 mol%. The mole concentration of water vapor is generally and preferably from 0.1 to 10 mol%. The mole concentration of ammonia in the nitrous oxide-containing gas is preferably 0.0002 mol% or higher and preferably 1 mol% or less from the viewpoint of the efficiency of decomposing nitrous oxide. The mole concentration of ammonia is more preferably from 0.0002 to 0.5 mol%, and still more preferably from 0.0002 to 0.2 mol%.

The content ratio [ammonia/water vapor] of ammonia to water vapor contained in the nitrous oxide-containing gas is not particularly limited and can be set, if appropriate. However, the content ratio is preferably 0.0010 or more in terms of molar ratio from the viewpoint of the efficiency of decomposing nitrous oxide. The molar ratio is more preferably from 0.0010 to 0.050, and more preferably from 0.0010 to 0.030 and still more preferably from 0.0010 to 0.010 from the viewpoint of suppressing or avoiding the problem of remaining ammonia (discharging into the air and removal workability). In addition, the content ratio [ammonia/nitrous oxide] of ammonia to nitrous oxide contained in the nitrous oxide-containing gas is not particularly limited and can be set, if appropriate. However, the content ratio is preferably from 0.005 to 10 as a molar ratio.

When the nitrous oxide-containing gas contains an oxygen gas, the content of oxygen gas in the nitrous oxide-containing gas is not particularly limited and can be set, if appropriate. However, the content is preferably 0.01 to 10000 mole times the content of ammonia in the nitrous oxide-containing gas. When the nitrous oxide-containing gas is free of oxygen gas, for example, the mixture can be obtained by mixing the nitrous oxide-containing gas and an oxygen-containing gas. Examples of the oxygen-containing gas include air.

The nitrous oxide-containing gas may also contain a reducing gas in order to further increase the efficiency of decomposing nitrous oxide. Similarly, in order to further increase the efficiency of decomposing nitrous oxide, it is possible to include a saturated hydrocarbon gas that is contained in the nitrous oxide-containing gas or reacts with oxygen generated in a reactor to be a raw material for generating a reducing gas such as a carbon monoxide gas. In view of the efficiency of decomposing nitrous oxide, a method of including a reducing gas in a nitrous oxide-containing gas is preferable. The reducing gas may be any reducing gas other than ammonia, and those used in a general catalytic reduction method can be used without particular limitation. Examples thereof include an unsaturated hydrocarbon gas, such as ethylene, propylene, $\alpha$-butylene and $\beta$-butylene, a carbon monoxide gas, a hydrogen gas, and a gas of alcohol compound, such as methanol, ethanol, propanol and butanol. Among them, at least one kind of a carbon monoxide gas, unsaturated hydrocarbon gas and hydrogen gas is preferable. Examples of the saturated hydrocarbon gas as a raw material for generating a reducing gas, such as a carbon monoxide gas include methane, ethane, propane, and n-butane. Examples of the preferred saturated hydrocarbon gas include ethane, propane, and n-butane. The saturated hydrocarbon gas may be included using a gas mixture, such as natural gas, liquefied natural gas, and liquefied petroleum gas.

The content of the reducing gas or the saturated hydrocarbon gas in the nitrous oxide-containing gas is not particularly limited, and can be set, if appropriate. For example, the mole concentration of the reducing gas or the saturated hydrocarbon gas in the nitrous oxide-containing gas is from 0.001 to 1 mol%. The molar ratio [reducing gas or saturated hydrocarbon gas/water vapor] of the reducing gas or the saturated hydrocarbon gas to water vapor in the nitrous oxide-containing gas is preferably from 0.0003 to 0.03. In addition, the content ratio [reducing gas or saturated hydrocarbon gas/nitrous oxide] of the reducing gas or saturated hydrocarbon gas to nitrous oxide contained in the nitrous oxide-containing gas is from 0.01 to 100 as a molar ratio.

In the present invention, the nitrous oxide-containing gas may be prepared by appropriately mixing nitrous oxide, water vapor, ammonia, and the above-mentioned gases other than these. In addition, various exhaust gases discharged from a chemical production plant can also be used. For example, a gas discharged from a chemical production plant, such as a nitric acid production plant, an $\varepsilon$-caprolactam production plant, and an adipic acid production plant often contains, in addition to nitrous oxide, water vapor and ammonia, and further contains oxygen gas, and can be effectively utilized in the decomposition method of the present invention. In particular, the exhaust gas may satisfy, for instance, the content and the content ratio in the above ranges. This is preferable from the viewpoint that the decomposition method of the present invention can be directly applied to the exhaust gas, for example, without adjusting the content.

<Contact step>

In the decomposition method of the present invention, the catalyst is brought into contact with the nitrous oxide-containing gas.

In this contact step, nitrous oxide in the nitrous oxide-containing gas comes into contact with the catalyst. Accordingly, even in the co-presence of water vapor, a nitrous oxide-decomposing reaction shown in the following formula occurs. As a result, the nitrous oxide is efficiently decomposed into nitrogen molecules and oxygen molecules.

$$\text{Nitrous oxide-decomposing reaction:} \qquad N_2O \rightarrow N_2 + 1/2O_2$$

Ammonia in the nitrous oxide-containing gas further promotes the nitrous oxide-decomposing reaction. Details of the mechanism of action are not yet clear, but are considered as follows. For example, in the presence of a catalyst exhibiting a reducing action, such as a ruthenium-carrying catalyst, it is presumed that ammonia reacts with nitrous oxide on the surface of the catalyst, whereby nitrous oxide is decomposed into nitrogen molecules and water molecules to be able to further promote the nitrous oxide-decomposing reaction. On the other hand, in the presence of a catalyst that does not exhibit a reducing action, such as a ruthenium oxide-carrying catalyst, it is presumed that oxygen atoms are removed from the catalyst surface by reacting with oxygen atoms remaining on the catalyst surface to maintain the catalytic activity (suppress deactivation of the catalyst), so that the decomposition reaction can be promoted.

In the contact step, the nitrous oxide-containing gas is brought into contact with the catalyst.

The contact method is not particularly limited, and may be, for example, a batch type or a continuous type. Here, a continuous type is preferable from the viewpoint of reaction efficiency. Examples of the continuous type include a fixed bed type and a fluidized bed type.

The contact temperature (reaction temperature) is determined, if appropriate, but is preferably 500°C or lower from the viewpoint of catalyst activity deterioration, and is preferably 100°C or higher from the viewpoint of reaction rate. The contact temperature is preferably from 200 to 450°C and more preferably from 250 to 400°C.

In the continuous contact method, the rate of supplying the nitrous oxide-containing gas with respect to the weight of the catalyst is not particularly limited and is determined, if appropriate. For example, the flow rate at 0°C and 0.1013 MPa (absolute) based on 1 g of the catalyst is preferably from 10 to 10000 cm$^3$/min and more preferably from 50 to 5000 cm$^3$/min.

The reaction pressure varies depending on, for instance, the contact temperature, the rate of supplying the nitrous oxide-containing gas, or the pressure of the outside air around the reactor. The reaction pressure is preferably a pressure higher than the outside air pressure, and is preferably from 0.08 to 1 MPa (absolute) as an absolute pressure, and more preferably from 0.09 to 0.7 MPa (absolute) as an absolute pressure.

<Other steps>

The decomposition method of the present invention may include a step(s) other than the contact step. Examples thereof include a step of adjusting the content of a component(s) in the nitrous oxide-containing gas and/or a step of introducing an oxygen gas or a reducing gas into the nitrous oxide-containing gas.

[Apparatus for decomposing nitrous oxide]

An apparatus for decomposing nitrous oxide according to the present invention includes: a reactor filled with a catalyst including a titanium oxide-containing carrier carrying a component containing at least one kind selected from the group consisting of ruthenium and ruthenium compounds; and a line that is connected to the reactor and supplies, to the reactor, a nitrous oxide-containing gas containing nitrous oxide, water vapor and ammonia. This decomposition apparatus makes it possible to efficiently decompose nitrous oxide in the nitrous oxide-containing gas into nitrogen molecules and oxygen molecules.

The catalyst and the nitrous oxide-containing gas in the decomposition apparatus of the present invention are as described above.

<Reactor>

The reactor is a container in which nitrous oxide in the nitrous oxide-containing gas supplied to the catalyst is decomposed by the catalyst provided inside the reactor. For example, the shape and size thereof are set, if appropriate. Examples of the reactor used in a continuous contact method include a tubular or tower-type reactor, such as a metal tube and a column tower. Specific examples include various fixed-bed reactors. A part or the whole of the internal space of the reactor is built with or filled with the catalyst. This reactor is provided such that the surface of the internal space through which the nitrous oxide-containing gas flows may be formed of a material having resistance to the nitrous oxide-containing gas. Examples thereof include a metal reactor containing iron, such as stainless steel, as a main component. The reactor may be equipped internally or externally with a heater for heating its internal space.

<Line>

The decomposition apparatus of the present invention includes a line (supply pipe) that is connected to the reactor and supplies a nitrous oxide-containing gas to an internal space of the reactor. This line is provided such that the surface of an inner hole(s) through which the nitrous oxide-containing gas flows may be formed of a material having resistance to the nitrous oxide-containing gas, and the dimension, for instance, is set, if appropriate. This line may include a pump for transferring the nitrous oxide-containing gas and/or a heater for heating the internal space. This line may also be directly or indirectly connected to a line through which nitrogen oxide (NOx) is discharged from a denitration reactor.

The above reactor may include an emission line through which a nitrous oxide-containing gas after brought into contact with the catalyst is discharged.

In addition, the above reactor or line may be connected to various gas introduction pipes for adjusting the content of each gas in the nitrous oxide-containing gas.

In the decomposition apparatus of the present invention, the nitrous oxide-containing gas is brought into contact with the catalyst filled in the internal space of the reactor, and is preferably made to flow (pass) through the catalyst. In this case, the nitrous oxide in the nitrous oxide-containing gas can be efficiently decomposed, so that the emission of the nitrous oxide can be suppressed as described above. In a preferred embodiment of the present invention, ammonia in the nitrous oxide-containing gas can also be efficiently decomposed, so that the discharge of ammonia can be suppressed.

The decomposition method and the decomposition apparatus of the present invention can be used in various fields and applications for decomposing and removing nitrous oxide. For example, they can be used in a chemical production plant. In particular, they can be suitably used in a chemical production plant, such as a nitric acid production plant, an ε-caprolactam production plant and an adipic acid production plant, that discharges a gas containing nitrous oxide, ammonia and water vapor.

When the decomposition apparatus of the present invention is applied to an existing production plant, the position, where the decomposition apparatus of the present invention is installed, is not particularly limited. Here, the decomposition apparatus is usually incorporated in the last stage in the flowing direction of the exhaust gas, for example, in a stage before the discharge tower. Specifically, in the case of a nitric acid production plant, the apparatus is incorporated in a stage after the denitration reactor. When the decomposition apparatus of the present invention is applied to an existing production plant, a discharge pipe of the production plant can be used as a line of the decomposition apparatus of the present invention. The decomposition apparatus of the present invention can be provided together with a nitrous oxide-decomposing device just by integrating the reactor into the existing production plant. Thus, the existing production plant can be effectively utilized.

EXAMPLES

Hereinafter, Examples of the present invention will be described. The present invention, however, is not limited thereto.

<Production Example 1>

A $RuO_2/TiO_2$ catalyst was produced as follows.

Titanium oxide moldings (cylindrical pellets having a diameter of 3 mm and a length of 4 to 6 mm) obtained by extruding titanium oxide powder (manufactured by Showa Denko K. K.) were calcinated at 800°C for 3 hours by using a muffle furnace to obtain each titanium oxide-made carrier (specific surface area: 5 $m^2$/g; 100% rutile crystal form). The specific surface area of the titanium oxide-made carrier was measured by a BET 1-point method using nitrogen adsorption at 77 K.

0.38 g of ruthenium chloride hydrate ($RuCl_3 \cdot nH_2O$; Ru content: 40%; manufactured by Furuya Metal Co., Ltd.)

was dissolved in 2.0 g of ion-exchanged water. The resulting solution was impregnated into 9.7 g of titanium oxide-made carrier by an incipient wetness method, and the resulting material was then air-dried at room temperature (25°C) overnight in an air atmosphere to obtain each titanium oxide solid carrying ruthenium chloride hydrate.

The obtained solid was filled into a quartz glass tube provided with a sheath tube for measuring an internal temperature. The temperature was then raised to a furnace temperature of 250°C under air flow at 200 cm$^3$ (0°C, 0.1013 MPa (absolute))/min by using an electric tube furnace. Subsequently, the solid was held at the same temperature for 2 hours for calcination. The temperature in the quartz glass tube at an electric tube furnace temperature of 250°C was 275°C. The calcination caused 10 g of $RuO_2$/$TiO_2$ catalyst containing 2.0 mass% of ruthenium oxide (Ru content: 1.5 mass%).

<Example 1>

A quartz glass reaction tube (inner diameter: 8 mm) equipped with a sheath tube for internal temperature measurement was filled with 0.24 g of the $RuO_2$/$TiO_2$ catalyst produced in Production Example 1. The reaction tube was placed in an electric furnace, and the temperature in the quartz glass tube was raised to 300°C under normal pressure (0.1 MPa (absolute)) and helium flow at 100 cm$^3$ (0°C, 0.1013 MPa (absolute))/min. Subsequently, at the same pressure and the same temperature, a gas to be brought into contact with the catalyst was switched from helium to a nitrous oxide-containing gas (flow rate: 100 cm$^3$ (0°C, 0.1013 MPa (absolute))/min) having the composition shown in the following Table 1 to perform a reaction of decomposing nitrous oxide.

A reaction outlet gas (post-reaction gas) obtained from the reaction tube after 0.5 hours from the start of the nitrous oxide-decomposing reaction was analyzed as follows.

The content $C_B$ of nitrous oxide in the nitrous oxide-containing gas and the content $C_A$ of nitrous oxide in the reaction outlet gas were analyzed using gas chromatography (Micro GC (detector: Micro TCD; column: CP-PoraPLOT Q 10 m) manufactured by VARIAN). The analyzed nitrous oxide concentrations were then used to calculate the rate of decreasing the nitrous oxide concentration from the following formula. The results are shown in Table 2.

$$\text{Rate (\%) of decreasing nitrous oxide concentration} = [(C_B - C_A)/C_B] \times 100.$$

The ammonia concentration of the reaction outlet gas was analyzed using an ammonia gas detection tube (No. 3La, manufactured by Gas Tech Co., Ltd.) under one-time suction condition (measurement range: 0.0005 to 0.0100%). The results are shown in Table 2.

<Examples 2 to 6 and Comparative Example 1>

The nitrous oxide-decomposing reaction and analysis were performed in the same manner as in Example 1, except that the decomposition reaction was started by sequentially switching the gas supplied to the reaction tube filled with the catalyst to the nitrous oxide-containing gas having the composition shown in Table 1 below after the decomposition reaction and analysis in Example 1 were conducted.

Example 2 to 6 and Comparative Example 1 were performed in the order of Example 2, Comparative Example 1, Example 3, Example 4, Example 5, and Example 6. The results obtained are shown in Table 2.

The composition of the nitrous oxide-containing gas is shown in Table 1. The remainder of the nitrous oxide-containing gas is helium gas.

Table 1

| | Content of component in nitrous oxide-containing gas (Unit: mol%; balance gas: helium) | | | | | Molar ratio *2 | Molar ratio *3 | Molar ratio *4 |
|---|---|---|---|---|---|---|---|---|
| | Nitrous oxide | Water vapor | Ammonia | Carbon monoxide | Carbon dioxide*1 | | | |
| Example 1 | 0.10 | 3.0 | 0.10 | 0 | 0 | 0.033 | 1.0 | 0 |
| Example 2 | 0.10 | 1.0 | 0.030 | 0 | 0 | 0.030 | 0.30 | 0 |
| Example 3 | 0.10 | 3.0 | 0.0080 | 0 | 0 | 0.0027 | 0.08 | 0 |
| Example 4 | 0.10 | 3.0 | 0.0050 | 0 | 0 | 0.0017 | 0.05 | 0 |

(continued)

| | Content of component in nitrous oxide-containing gas (Unit: mol%; balance gas: helium) | | | | | Molar ratio *2 | Molar ratio *3 | Molar ratio *4 |
|---|---|---|---|---|---|---|---|---|
| | Nitrous oxide | Water vapor | Ammonia | Carbon monoxide | Carbon dioxide*1 | | | |
| Comparative Example 1 | 0.10 | 3.0 | 0 | 0 | 0 | 0 | 0 | 0 |
| Example 5 | 0.10 | 3.0 | 0.0080 | 0.010 | 0.075 | 0.0027 | 0.08 | 0.0033 |
| Example 6 | 0.10 | 3.0 | 0.0050 | 0.010 | 0.075 | 0.0017 | 0.05 | 0.0033 |

*1: The content of carbon dioxide is the content of carbon dioxide mixed in carbon monoxide.
*2: Molar ratio of ammonia to water vapor [ammonia/water vapor]
*3: Molar ratio of ammonia to nitrous oxide [ammonia/nitrous oxide]
*4: Molar ratio of reducing gas to water vapor [reducing gas/water vapor]

Table 2

| | Rate of decreasing nitrous oxide concentration (%) | Reaction outlet gas Ammonia concentration (mol%) |
|---|---|---|
| Example 1 | 74 | 0.0055 |
| Example 2 | 39 | 0.0020 |
| Example 3 | 11 | <0.0005 (Below detection limit) |
| Example 4 | 9 | Unmeasured |
| Comparative Example 1 | 4 | - |
| Example 5 | 23 | Unmeasured |
| Example 6 | 20 | <0.0005 (Below detection limit) |

Note that in Examples 4 and 5, the ammonia concentration in the reaction outlet gas was not measured because ammonia was estimated to be below the detection limit (denoted as "Unmeasured" in Table 2).

<Production Example 2>

A Ru/TiO$_2$ catalyst was produced, in advance, by reducing RuO$_2$/TiO$_2$ used in Examples 1 to 6 or Comparative Example 1 while using hydrogen gas as follows.

A quartz glass tube (inner diameter: 8 mm) equipped with a sheath tube for internal temperature measurement was filled with 0.24 g of the RuO$_2$/TiO$_2$ catalyst. This reaction tube was placed in an electric furnace, and the temperature was raised up to a furnace temperature of 200°C at a temperature elevation rate of 5°C/min under normal pressure and a flow of an argon/hydrogen mixed gas (hydrogen: 5 mol%; argon: 95 mol%) at 50 cm$^3$ (0°C, 0.1013 MPa (absolute))/min. Then, the RuO$_2$/TiO$_2$ catalyst was reduced using hydrogen by holding the catalyst at the same pressure and the same temperature for 0.5 hours to prepare a Ru/TiO$_2$ catalyst. The temperature in the quartz glass tube at an electric tube furnace temperature of 200°C was 206°C.

<Comparative Example 2>

After the production of the Ru/TiO$_2$ catalyst, a gas to be brought into contact with the catalyst was switched from an argon/hydrogen mixed gas to helium at 100 cm$^3$ (0°C, 0.1013 MPa (absolute))/min under the same pressure and the same temperature, and the temperature was then raised until the temperature in the quartz glass tube reached 300°C. Subsequently, at the same pressure and the same temperature, a gas to be brought into contact with the catalyst was switched from helium to a nitrous oxide-containing gas (flow rate: 100 cm$^3$ (0°C, 0.1013 MPa (absolute))/min) having the composition shown in the following Table 3 to perform a reaction of decomposing nitrous oxide.

A reaction outlet gas obtained from the reaction tube after 0.5 hours from the start of the nitrous oxide-decomposing reaction was analyzed by substantially the same procedure as in Example 1. The results are shown in Table 4.

<Examples 7 and 8>

The nitrous oxide-decomposing reaction and analysis were performed in the same manner as in Comparative Example 2, except that the decomposition reaction was started by sequentially switching the gas supplied to the reaction tube filled with the catalyst to the nitrous oxide-containing gas having the composition shown in Table 3 below after the reaction and analysis in Comparative Example 2 were conducted.

Examples 7 and 8 were performed in the order of Example 7 and Example 8. The results obtained are shown in Table 4.

The composition of the nitrous oxide-containing gas is shown in Table 3. The remainder of the nitrous oxide-containing gas is helium gas.

Table 3

| | Content of component in nitrous oxide-containing gas (Unit: mol%; balance gas: helium) | | | | | Molar ratio *2 | Molar ratio *3 | Molar ratio *4 |
|---|---|---|---|---|---|---|---|---|
| | Nitrous oxide | Water vapor | Ammonia | Carbon monoxide | Carbon dioxide*1 | | | |
| Example 7 | 0.10 | 3.0 | 0.0080 | 0.010 | 0.075 | 0.0027 | 0.080 | 0.0033 |
| Example 8 | 0.10 | 3.0 | 0.0050 | 0.010 | 0.075 | 0.0017 | 0.050 | 0.0033 |
| Comparative Example 2 | 0.10 | 3.0 | 0 | 0.010 | 0.075 | 0 | 0 | 0.0033 |
| *1: The content of carbon dioxide is the content of carbon dioxide mixed in carbon monoxide. | | | | | | | | |
| *2: Molar ratio of ammonia to water vapor [ammonia/water vapor] | | | | | | | | |
| *3: Molar ratio of ammonia to nitrous oxide [ammonia/nitrous oxide] | | | | | | | | |
| *4: Molar ratio of reducing gas to water vapor [reducing gas/water vapor] | | | | | | | | |

Table 4

| | Rate of decreasing nitrous oxide concentration (%) | Reaction outlet gas Ammonia concentration (mol%) |
|---|---|---|
| Example 7 | 26 | Unmeasured |
| Example 8 | 23 | Unmeasured |
| Comparative Example2 | 20 | - |

Note that in Examples 7 and 8, the ammonia concentration in the reaction outlet gas was not measured because ammonia was estimated to be below the detection limit (denoted as "Unmeasured" in Table 4).

The results shown in Tables 1 to 4 have clearly demonstrated that when ammonia is absent during the catalyst-nitrous oxide contact (Comparative Examples 1 and 2), the rate of decreasing the nitrous oxide concentration is small and the efficiency of decomposing nitrous oxide is insufficient.

By contrast, when ammonia is co-present during the catalyst-nitrous oxide contact (Examples 1 to 8), the rate of decreasing the nitrous oxide concentration is larger than that in the Comparative Examples. Thus, nitrous oxide can be efficiently decomposed. In addition, when the molar ratio of ammonia to water vapor [ammonia/water vapor] is set to 0.001 to 0.030 (Examples 2 to 8), the ammonia concentration in the reaction outlet gas can be decreased while a favorable efficiency of decomposing nitrous oxide is maintained. Thus, ammonia can also be efficiently decomposed.

INDUSTRIAL APPLICABILITY

The method of decomposing nitrous oxide and the apparatus for decomposing nitrous oxide according to the present invention make it possible to efficiently decompose nitrous oxide in a gas containing nitrous oxide, water vapor and ammonia.

**Claims**

1. A method of decomposing nitrous oxide, which comprises the step of bringing a catalyst comprising a titanium oxide-containing carrier carrying a component containing at least one kind selected from the group consisting of ruthenium and ruthenium compounds into contact with a nitrous oxide-containing gas containing nitrous oxide, water vapor and ammonia.

2. The method of decomposing nitrous oxide according to claim 1, wherein a molar ratio of the ammonia to the water vapor contained in the nitrous oxide-containing gas is from 0.001 to 0.050.

3. The method of decomposing nitrous oxide according to claim 1 or 2, wherein a mole concentration of the nitrous oxide contained in the nitrous oxide-containing gas is from 0.002 to 10%.

4. The method of decomposing nitrous oxide according to any one of claims 1 to 3, wherein a mole concentration of the water vapor contained in the nitrous oxide-containing gas is from 0.1 to 10%.

5. The method of decomposing nitrous oxide according to any one of claims 1 to 4, wherein the nitrous oxide-containing gas further comprises a saturated hydrocarbon gas.

6. The method of decomposing nitrous oxide according to any one of claims 1 to 5, wherein the nitrous oxide-containing gas further comprises a reducing gas.

7. The method of decomposing nitrous oxide according to claim 6, wherein the reducing gas is a carbon monoxide gas, an unsaturated hydrocarbon gas, or a hydrogen gas.

8. The method of decomposing nitrous oxide according to any one of claims 1 to 7, wherein the nitrous oxide-containing gas is a gas discharged from a chemical production plant.

9. An apparatus for decomposing nitrous oxide, comprising:

   a reactor filled with a catalyst comprising a titanium oxide-containing carrier carrying a component containing at least one kind selected from the group consisting of ruthenium and ruthenium compounds; and
   a line that is connected to the reactor and supplies, to the reactor, a nitrous oxide-containing gas containing nitrous oxide, water vapor and ammonia.

## INTERNATIONAL SEARCH REPORT

| International application No. |
|---|
| **PCT/JP2022/021707** |

### A. CLASSIFICATION OF SUBJECT MATTER

**B01D 53/86**(2006.01)i; **B01J 23/46**(2006.01)i
FI:  B01D53/86 222; B01J23/46 301A; B01D53/86 ZAB

According to International Patent Classification (IPC) or to both national classification and IPC

### B. FIELDS SEARCHED

Minimum documentation searched (classification system followed by classification symbols)

B01D53/86; B01J23/46

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2012-192338 A (NIPPON SHOKUBAI CO LTD) 11 October 2012 (2012-10-11) claims 1, 4-5, paragraph [0025], example 1 | 1-9 |
| Y | JP 2006-281026 A (TOKYO INSTITUTE OF TECHNOLOGY) 19 October 2006 (2006-10-19) claims 1, 3, paragraphs [0002], [0022], [0023] | 1-9 |
| Y | JP 2005-125285 A (KANKEN TECHNO CO LTD) 19 May 2005 (2005-05-19) claims 1, 3, paragraph [0041] | 5-7 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 July 2022** | **26 July 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2022/021707**

| Patent document cited in search report | | | Publication date (day/month/year) | Patent family member(s) | Publication date (day/month/year) |
|---|---|---|---|---|---|
| JP | 2012-192338 | A | 11 October 2012 | (Family: none) | |
| JP | 2006-281026 | A | 19 October 2006 | (Family: none) | |
| JP | 2005-125285 | A | 19 May 2005 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06218232 A

**Non-patent literature cited in the description**

- Catalyst Preparation Chemistry. Kodansha Ltd, 1989, 211
- Catalyst Preparation Chemistry. Kodansha Ltd, 1989, 89
- Catalyst Engineering Course, Handbook of Catalysts Using Any of 10 Elements. Chijinshokan, Co. Ltd, 1978, 254
- Metal Oxides and Composite Oxides. Kodansha Ltd, 1980, 107